# EUROPEAN PATENT APPLICATION

(11) **EP 1 153 791 A2**
(43) Date of publication of application: **14.11.2001**
(21) Application number: 01111360.2
(22) Date of filing: 09.05.2001
(51) Int. Cl.: B60P 7/08

(54) **Winding device**

(30) Priority: 09.05.2000 GB 0011122
(71) Applicant: Schmidt, Heinrich, 45731 Waltrop (DE)
(72) Inventor: Schmidt, Heinrich, 45731 Waltrop (DE)
(74) Representative: Vossius, Corinna

(57) **Abstract**

A device for winding a strap or like elongate flexible article so as to form a roll, the device comprising strap engaging means, drive means arranged so as to turn the strap engaging means, and guide means arranged so as to guide the strap onto the engaging means thereby to form the roll.

## Description

The present invention relates to a device for winding straps or webbing so as to form a roll. More particularly, it relates to a device for winding straps used to secure loads on commercial vehicles and the like so as to form a roll.

In recent years, the use of standard ropes to secure loads on commercial vehicles such as trucks or vans has been largely superseded by the use of webbing type straps that often use a ratchet system to tension the strap over the items to be secured.

When the straps are not required, best practice is to roll them up into a circular roll such that they may be safely and compactly stowed. This prevents straps from becoming contaminated with dirt or becoming worn by being allowed to move freely on the load area of a vehicle. Furthermore, leaving a strap loose on the load area may cause a trip-hazard, and is therefore a heath and safety issue.

Over the course of a number of loading and unloading operations during a day, the manual rolling up of straps contributes significantly to unproductive time on the part of the vehicle operator. Therefore, due to the increasing pressures on operators to minimise standing times, it is unfortunately often the case that this procedure is not carried out, resulting in the attendant problems as described above.

The present invention seeks to overcome or at least mitigate the above described problems.

According to a first aspect of the present invention there is provided a device for winding a strap or like elongate flexible article so as to form a roll. The device comprises strap engaging means, drive means arranged so as to turn the strap engaging means, and guide means arranged so as to guide the strap onto the engaging means thereby to form the roll. Preferably, a shaft connects the drive means to the strap engaging means. More preferably, the shaft is mounted in a casing for relative rotational movement therebetween.

According to another optional feature of this aspect of the present invention the engaging means may be biased into the deployed position by resilient means. Preferably the resilient means is mounted within the casing.

According to a further optional feature of this aspect of the present invention the resilient means may comprise a helical spring.

According to a yet further optional feature of this aspect of the present invention there is provided a device that is movably mounted to a box such that when not in use, the device may be moved into a stowed position and secured within the box. Preferably the device is slidably mounted on a guide. More preferably locking means releasably secures the device in a desired position relative to the box.

According to yet another optional feature of this aspect of the present invention the box may further have sufficient stowage space for one or more strap rolls.

According to another optional feature of this aspect of the present invention the drive means may comprise a hand operated crank.

A second aspect of the invention provides a winder for rolling a strap or like elongate flexible article so as to form a roll. The winder comprises a strap engaging hub connected via a shaft to a handle and a guide spaced from the hub so as to guide the strap onto the hub thereby to form the roll. The hub may be retracted into a casing surrounding the shaft so as to release the roll from the hub. Preferably, the hub may comprise a pair of spaced elongate fingers projecting from the shaft.

According to an optional feature of this aspect of the invention, a spring may be mounted within the casing so as to bias the hub into a deployed position.

According to a further optional feature of this aspect of the invention, the guide may comprise a pair of mutually spaced elongate guide fingers.

Exemplary embodiments of the invention will now be described, by way of example only, with reference to the accompanying drawings in which:
FIGURE 1 is a perspective view of the winding device of the present invention in use;
FIGURE 2A is a partial cross-sectional view through the device along line X-X of Figure 3 with the strap engaging means in a deployed position;
FIGURE 2B is a similar partial cross-sectional view to Figure 2a but with the strap engaging means in a retracted position;
FIGURE 3 is a partial cross-sectional side view of the device according to the present invention; and
FIGURE 4 is a plan view of the device according to the present invention.

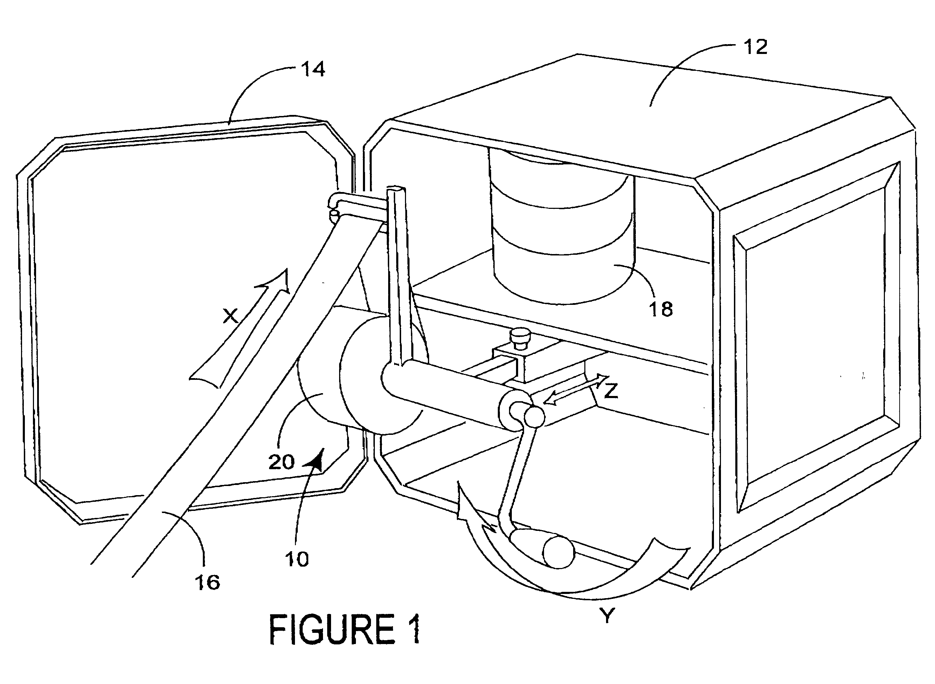

Referring to Figure 1, it can be seen that a device for winding a strap or similar elongate flexible article indicated generally at 10 is, in this embodiment, mounted to a box 12. As can be seen from Figure 1, a box 12 advantageously includes a door 14 that may be releasably secured to prevent unwanted access to the box. The box preferably includes additional storage space for one or more strap rolls 18.

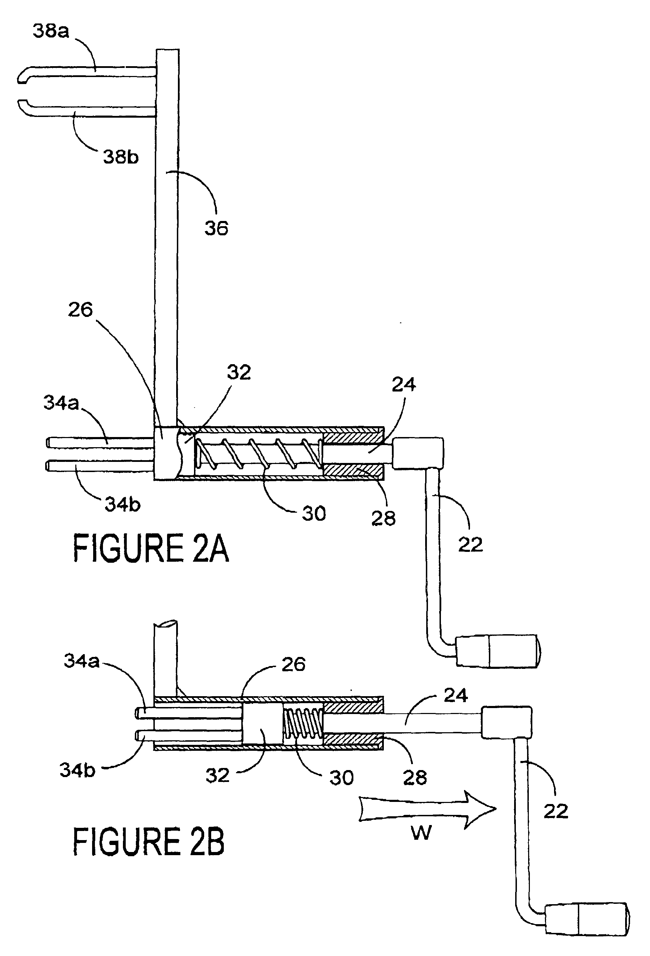

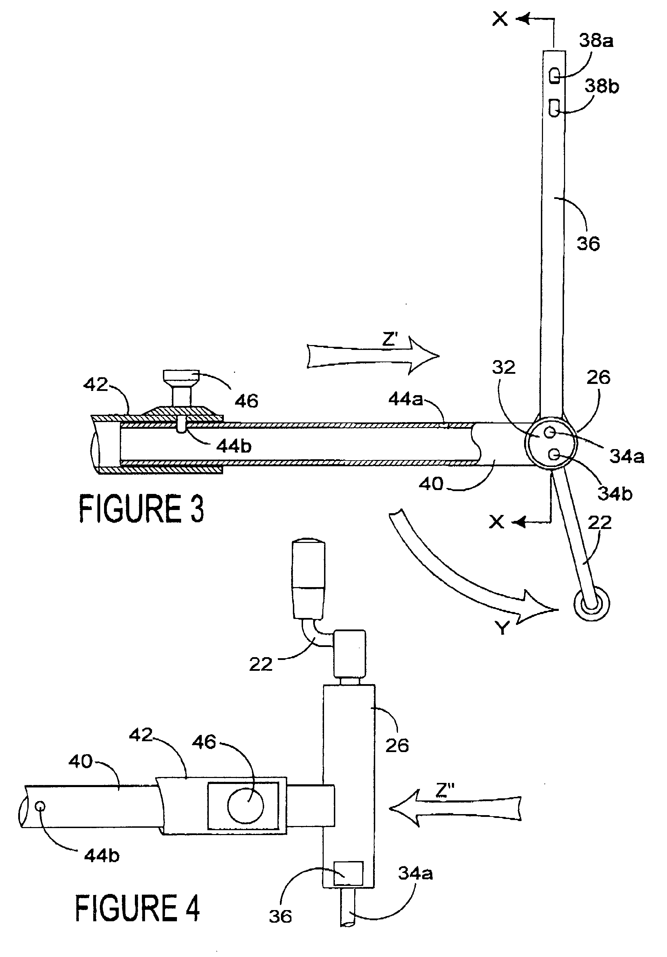

The construction of the winding device is illustrated in more detail in Figures 2A, 2B, 3 and 4. Referring first in particular to Figures 2a and 3, it can be seen that the device comprises drive means 22 that is preferably provided by a hand operated crank handle 22. The crank handle 22 is in turn non-rotatably mounted onto a crankshaft 24 located within a substantially cylindrical crank casing 26. An enlarged end portion 32 of the crankshaft 24 is advantageously provided, to which strap engaging means is mounted. In this embodiment, the strap engaging means comprises fingers 34a and 34b arranged in substantially parallel spaced relationship to the axis of the crankshaft 24. The fingers 34a and 34b may be secured to the crankshaft 24 by any suitable means, for example by welding or via a screw fitting.

In this embodiment, a push-fit bush 28 is located within the casing 26 and acts both as a bearing to enable smooth rotatable and axially slidable motion of the crankshaft 24, and to hold the crankshaft 24 within the casing 26. In other classes of embodiment other suitable types of bush/bearing, such as conventional roller bearings may be used. The bush further serves to retain one end of the resilient means such as compression spring 30 within the casing 26. It can be seen in this embodiment that the other end of the spring 30 abuts the enlarged portion 32 of crankshaft 24. This in turn biases the fingers 34a and 34b outwardly as can be seen most clearly in Figure 2A.

In order to ensure a uniform strap roll is formed, guide means such as guide fingers 38a and 38b arranged in substantially spaced parallel relationship with fingers 34a and 34b of the strap engaging means is provided. In this embodiment, the fingers 34a and 34b have cranked convergent free ends to effectively hold the strap 16 in the desired position. In order to prevent the fingers 34a and 34b interfering with the strap roll 20 as it progressively increases in size during the winding process, the guide fingers 38a and 38b are spaced from the strap engaging fingers 34a and 34b by a spacer element such as an elongate bar 38. It should be understood that in other classes of embodiment, alternative guide means may be used such a bobbin type roller, and that the length of the bar 38 may be adjusted according to the size of the roll that is to be produced.

In order to mount the device on a fixed member such as box 12, mounting means, preferably telescopic and comprising an inner tubular section 40 slidably mounted within a guide 42, is provided. This arrangement enables the device to be retracted into the box 12 in a direction Z" such that end door 14 may be closed and secured with the device held inside. Alternatively the device may be free standing, and is therefore provided with a suitable known form of stand.

In order to prevent unwanted slidable motion of the device in either the retracted or deployed positions, apertures 44a and 44b may be provided by inner tube 40 and are engaged by releasable locking means such as spring loaded bolt 46 provided on the outer tube 42. It should be understood that in other embodiments, alternative locking means such as a screw bolt mounted on the guide that frictionally engages the inner tube may be used, or the locking means dispensed with entirely.

In order to roll up a loose strap, the device operator opens door 14 of box 12, releases locking bolt 46 from aperture 44a, slides the device clear of the box 12 in a direction Z' and replaces the bolt in aperture 44b. The operator then places one free end of the strap 16 between strap engaging fingers 34a and 34b and places the strap 16 through the guide fingers 38a and 38b. The operator may then commence winding the handle 22 preferably in a direction Y thus causing the strap to be wound in a direction X to form the roll 20. Once the winding is complete, the operator pulls the handle 22 in a direction W thereby retracting fingers 34a and 34b into the crank casing 26 thus releasing the roll 20 which is then preferably stowed in the box as illustrated at 18. The provision of spaced substantially parallel fingers 34a and 34b allows the roll to be released in a relatively unrestricted way. The operator then releases the handle and reverses the device deploying procedure to secure the device back into box 12.

It should be understood that numerous changes may be made within the scope of the invention. For example, the handle could be replaced by other drive means such as an electric motor or hand wheel, the box may be dispensed with in certain circumstances, other strap engaging means such as a slotted bar may be used to engage the strap on the shaft, other means such as a folding arrangement may be used to retract the device into the box, and alternative resilient means such as gas type springs may be used.

## Claims

1. A device for winding a strap or like elongate flexible article so as to form a roll, the device comprising strap engaging means, drive means arranged so as to turn the strap engaging means, and guide means arranged so as to guide the strap onto the engaging means thereby to form the roll wherein the strap engaging means may be retracted from a deployed position so as to release the strap roll therefrom.

2. A device according to claim 1 wherein a shaft connects the drive means to the strap engaging means.

3. A device according to claim 2 wherein the shaft is mounted in a casing for relative rotational movement therebetween.

4. A device according to claim 3 wherein the strap engaging means is retracted into the casing from the deployed position.

5. A device according to claim 3 or claim 4 wherein the engaging means is biased into the deployed position by resilient means.

6. A device according to claim 5 wherein the resilient means is mounted within the casing.

7. A device according to claim 5 or claim 6 wherein the resilient means comprises a helical spring.

8. A device according to any preceding claim that is movably mounted to a box such that when not in use, the device may be moved into a stowed position and secured within the box.

9. A device according to claim 8 wherein the device is slidably mounted on a guide.

10. A device according to claim 9 wherein locking means releasably secures the device in a desired position relative to the box.

11. A device according to any one of claims 8 to 10 wherein the box further has sufficient stowage space for one or more strap rolls.

12. A device according to any preceding claim wherein the drive means comprises a hand operated crank.

13. A winder for rolling a strap or like elongate flexible article so as to form a roll, the winder comprising a strap engaging hub connected via a shaft to a handle and a guide spaced from the hub so as to guide the strap onto the hub thereby to form the roll, wherein the hub may be retracted into a casing surrounding the shaft so as to release the roll from the hub.

14. A winder according to claim 13 wherein the hub comprises a pair of spaced elongate fingers projecting from the shaft.

15. A winder according to claim 13 or claim 14 wherein a spring is mounted within the casing so as to bias the hub into a deployed position.

16. A winder according to any one of claims 13 to 15 wherein the guide comprises a pair of mutually spaced elongate guide fingers.

17. A device substantially as hereinbefore described.

18. A device substantially as hereinbefore described with reference to or as illustrated in Figures 1, 2A, 2B 3, or 4 of the drawings.
